# EUROPEAN PATENT APPLICATION

(11) **EP 4 793 138 A1**
(43) Date of publication of application: **19.08.2026**
(21) Application number: 26153963.9
(22) Date of filing: 26.01.2026
(51) Int. Cl.: B62D 21/15, B62D 25/02, B62D 25/20

(54) **LOWER VEHICLE-BODY STRUCTURE**

(30) Priority: 14.02.2025 JP 2025022499
(71) Applicant: MAZDA MOTOR CORPORATION, Hiroshima 730-8670 (JP)
(72) Inventor: Eiji, Kamemoto, Aki-gun, Hiroshima, 730-8670 (JP); Takuya, Saeki, Aki-gun, Hiroshima, 730-8670 (JP); Kotomi, Nozuru, Aki-gun, Hiroshima, 730-8670 (JP)
(74) Representative: Lorenz Seidler Gossel Part. mbB

(57) **Abstract**

[Problem] To provide a lower vehicle-body structure that allows a load applied to a side sill from a vehicle-width-direction outer side to be efficiently transmitted to a cross member.

[Means for Solution] A lower vehicle-body structure includes a pair of side sills, at least one cross member that couples the pair of side sills together, and a reinforcement extending in a front-rear direction in each of the pair of side sills. The reinforcement includes a first part disposed at a position that overlaps with at least one cross member when a vehicle is viewed in a side view, and a second part disposed at a position that does not overlap with at least one cross member when the vehicle is viewed in a side view. A rigidity of the second part against a load from a vehicle-width-direction outer side is lower than a rigidity of the first part against a load from the vehicle-width-direction outer side.

## Description

### [Technical Field]

The present disclosure relates to a lower vehicle-body structure.

### [Background Art]

Patent Literature 1 describes a vehicle-body structure including a pair of side sills, a cross member configured to connect the pair of side sills together, and a reinforcement member disposed in each side sill, and having a continuous cylinder structure in which a plurality of polygonal closed cross-sections are connected as seen from the vehicle width direction.

### [Citation List]

### [Patent Literature]

[Patent Literature 1] Japanese Patent Laid-Open No. 2021-024350

### [Summary of Invention]

### [Problems to be Solved by the Invention]

In the vehicle-body structure described in Patent Literature 1, there may be cases in which, when an object, such as a pole, collides with a portion of the side sill that has no cross member, the reinforcement member is displaced toward the vehicle-width-direction inner side, preventing sufficient transmission of the load to the cross member.

It is an object of the present disclosure to provide a lower vehicle-body structure that allows a load applied to the side sill from the vehicle-width-direction outer side to be efficiently transmitted to the cross member.

### [Means for Solving the Problems]

One aspect of the present disclosure provides a lower vehicle-body structure including:
a floor panel;
a pair of side sills disposed at both ends of the floor panel in a vehicle width direction, and extending in a front-rear direction;
at least one cross member disposed on an upper surface of the floor panel, and extending in the vehicle width direction to couple the pair of side sills together; and
a reinforcement extending in the front-rear direction in each of the pair of side sills, wherein
the reinforcement includes
   a first part disposed at a position that overlaps with the at least one cross member when a vehicle is viewed in a side view, and
   a second part disposed at a position that does not overlap with the at least one cross member when the vehicle is viewed in a side view, and
a rigidity of the second part against a load from a vehicle-width-direction outer side is lower than a rigidity of the first part against a load from the vehicle-width-direction outer side.

With such a configuration, it is possible to provide the lower vehicle-body structure that allows a load applied to the side sill from the vehicle-width-direction outer side (hereinafter may be referred to as "side collision load") to be efficiently transmitted to the cross member. In the case in which the rigidity of the second part against a side collision load (hereinafter rigidity against a side collision load may be simply referred to as "rigidity") is excessively high, when a load applied to the side sill from the vehicle-width-direction outer side acts on the second part, there may be cases in which the second part is less likely to be compressed in the vehicle width direction, leading to bending deformation. In this case, there may be cases in which the load applied to the side sill from the vehicle-width-direction outer side cannot be efficiently transmitted to the cross member via the reinforcement. In contrast, with this configuration, the rigidity of the second part is lower than the rigidity of the first part and hence, compared with a configuration in which the rigidity of the second part is equal to or higher than the rigidity of the first part, the second part is likely to be compressed when the load from the vehicle-width-direction outer side acts on the second part. As a result, the bending deformation of the reinforcement is suppressed, and the load applied to the side sill from the vehicle-width-direction outer side can be efficiently transmitted to the cross member via the reinforcement.

### [Advantageous Effects of Invention]

According to the present disclosure, it is possible to provide a lower vehicle-body structure that allows a load applied to a side sill from the vehicle-width-direction outer side to be efficiently transmitted to a cross member.

### [Brief Description of Drawings]

FIG. 1 is a top plan view of a lower vehicle-body structure according to one embodiment of the present disclosure.
FIG. 2 is a cross-sectional view taken along line II-II in FIG. 1.
FIG. 3 is a perspective view of the lower vehicle-body structure shown in FIG. 1, and the illustration of a side sill outer portion is omitted in FIG. 3.
FIG. 4 is a perspective view of a bracket shown in FIG. 2.
FIG. 5 is an upper surface of the lower vehicle-body structure, showing a reinforcement shown in FIG. 2 and an area around the reinforcement, and the illustration of a side sill is omitted in FIG. 5.
FIG. 6 is a perspective view of a reinforcement according to a modification of the embodiment.

### [Mode for Carrying Out the Invention]

Hereinafter, a lower vehicle-body structure of a vehicle according to one embodiment of the present disclosure will be described with reference to attached drawings. The following description is merely exemplary in nature, and is not intended to limit the present disclosure, its application, or uses.

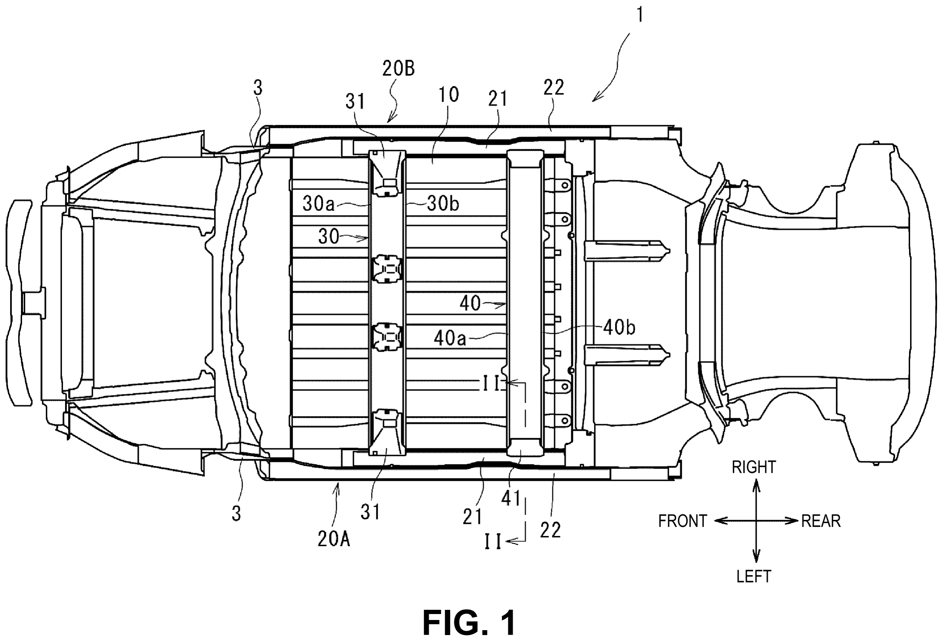

FIG. 1 is a top plan view of a lower vehicle-body structure 1 according to one embodiment of the present disclosure. The lower vehicle-body structure 1 is mounted in a vehicle, such as an automobile. In the present embodiment, the lower vehicle-body structure 1 is mounted in an electric automobile. In this DESCRIPTION, the front-rear direction, the left-right direction, and the up-down direction of the vehicle in which the lower vehicle-body structure 1 is mounted may be respectively referred to as "front-rear direction", "vehicle width direction", and "up-down direction". In this DESCRIPTION, the side close to the center line of the vehicle in the vehicle width direction may be referred to as "vehicle-width-direction inner side", and the side opposite to the center line of the vehicle in the vehicle width direction may be referred to as "vehicle-width-direction outer side.

Referring to FIG. 1, the lower vehicle-body structure 1 includes a floor panel 10, a pair of side sills 20A, 20B, a first cross member 30, and a second cross member 40. In the description made hereinafter, when it is unnecessary to particularly distinguish the pair of side sills 20A, 20B from each other, one of the pair of side sills 20A, 20B may be simply referred to as "side sill 20". Each of the first cross member 30 and the second cross member 40 of the present embodiment is an example of a cross member according to the present disclosure.

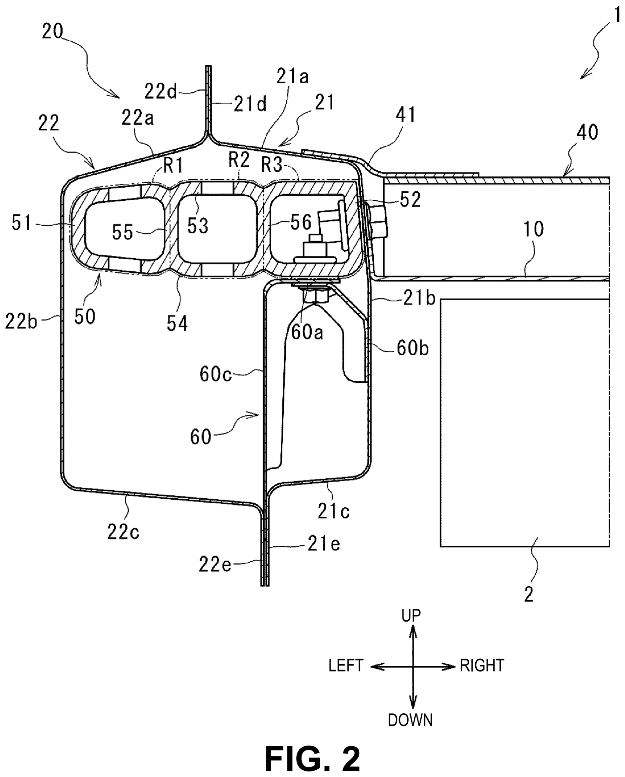

The floor panel 10 forms the floor surface of the vehicle cabin of the vehicle in which the lower vehicle-body structure 1 is mounted. The floor panel 10 is a press-formed product made of steel. The floor panel 10 has a plate shape extending in the front-rear direction and the vehicle width direction, with the thickness direction extending in the up-down direction. A battery case 2 (shown in FIG. 2) that houses a battery (not shown in the drawing) for the vehicle is disposed below the floor panel 10. The vehicle in the present embodiment is an electric automobile, and thus includes neither an internal combustion engine nor a transmission. Accordingly, neither an exhaust pipe nor a propeller shaft is disposed below the floor panel 10, and a so-called tunnel protruding upward and extending in the front-rear direction is not formed at the center of the floor panel 10 in the vehicle width direction.

The pair of side sills 20A, 20B are disposed at both ends of the floor panel 10 in the vehicle width direction. That is, the pair of side sills 20A, 20B are disposed to be spaced apart from each other in the vehicle width direction. The side sill 20 extends in the front-rear direction along the end portion of the floor panel 10 on the vehicle-width-direction outer side. The side sill 20 has a rectangular closed cross-section as viewed from the front-rear direction. The side sill 20 is made of steel. The side sill 20 is also referred to as "locker".

The first cross member 30 is disposed on the upper surface of the floor panel 10. The first cross member 30 extends in the vehicle width direction between the side sills 20A, 20B. The first cross member 30 connects the side sills 20A, 20B to each other. The first cross member 30 is a press-formed product made from a steel plate. The first cross member 30 has a hat shape open toward the lower side, and constitutes, in cooperation with the floor panel 10, a closed cross-sectional structure extending in the vehicle width direction. The first cross member 30 includes a front flange 30a disposed at the front edge thereof, and a rear flange 30b disposed at the rear edge thereof. The first cross member 30 is joined to the floor panel 10 by spot welding via the front flange 30a and the rear flange 30b. The first cross member 30 is a seat cross member on which front seats (not shown in the drawing) are attached.

Seat brackets 31 for fixing the front seats (not shown in the drawing) are attached to both ends of the first cross member 30 in the vehicle width direction. Each seat bracket 31 is a press-formed product made from a steel plate. The seat bracket 31 is joined to each of the first cross member 30 and the side sill 20 by spot welding. Consequently, both ends of the first cross member 30 in the vehicle width direction are coupled to the pair of side sills 20A, 20B via the seat brackets 31.

The second cross member 40 is disposed on the upper surface of the floor panel 10. The second cross member 40 is disposed behind the first cross member 30. That is, the second cross member 40 is disposed to be spaced apart from the first cross member 30 in the front-rear direction. The second cross member 40 extends in the vehicle width direction between the side sills 20A, 20B. The second cross member 40 connects the side sills 20A, 20B to each other. The second cross member 40 is a press-formed product made from a steel plate. The second cross member 40 has a hat shape open toward the lower side, and constitutes, in cooperation with the floor panel 10, a closed cross-sectional structure extending in the vehicle width direction. The second cross member 40 includes a front flange 40a disposed at the front edge thereof, and a rear flange 40b disposed at the rear edge thereof. The second cross member 40 is joined to the floor panel 10 by spot welding via the front flange 40a and the rear flange 40b.

Gussets 41 are attached to both ends of the second cross member 40 in the vehicle width direction. The gusset 41 is a press-formed product made from a steel plate. Each gusset 41 is joined to each of the second cross member 40 and the side sill 20 by spot welding. Both ends of the second cross member 40 in the vehicle width direction are coupled to the pair of side sills 20 via the gussets 41.

The second cross member 40 has a lower rigidity against a load from the vehicle-width-direction outer side than the first cross member 30. Seat brackets for fixing seats (not shown in the drawing) are not attached to the second cross member 40. That is, the second cross member 40 does not have a function to support the load of the seat.

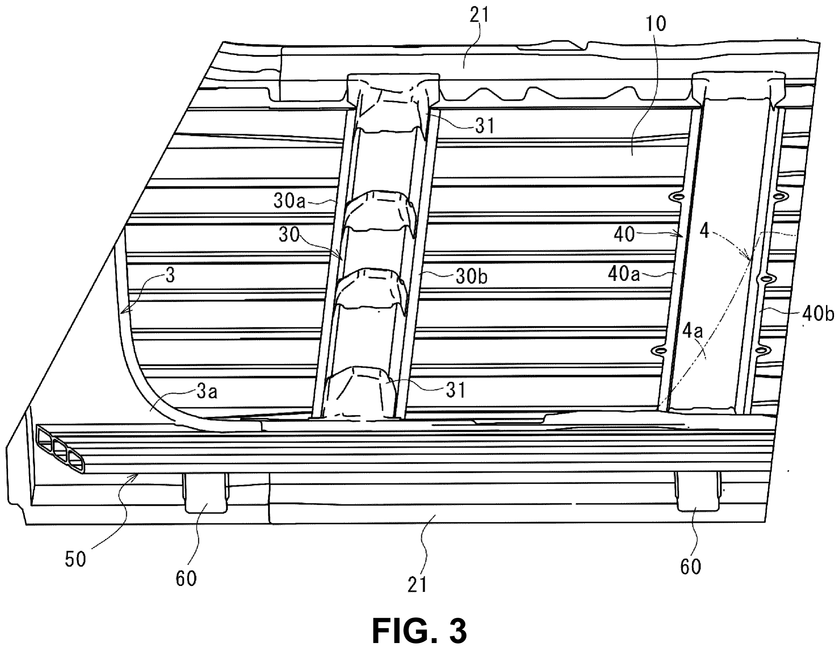

FIG. 2 is a cross-sectional view taken along line II-II in FIG. 1. FIG. 2 shows a portion of the side sill 20A connected to the second cross member 40, and an area around the portion. FIG. 3 is a perspective view of the lower vehicle-body structure 1, and the illustration of the side sill 20 is omitted in FIG. 3.

Referring to FIG. 2, the side sill 20 includes a side sill inner portion 21, and a side sill outer portion 22 disposed on the vehicle-width-direction outer side of the side sill inner portion 21. Each of the side sill inner portion 21 and the side sill outer portion 22 is a press-formed product made from a steel plate.

The side sill inner portion 21 is a plate member having a hat shape open toward the vehicle-width-direction outer side. To be more specific, the side sill inner portion 21 includes an upper wall 21a extending in the vehicle width direction, a side wall 21b extending downward from the inner end of the upper wall 21a in the vehicle width direction, and a lower wall 21c extending from the lower end of the side wall 21b toward the vehicle-width-direction outer side. The side sill inner portion 21 includes a flange 21d extending upward from the outer end of the upper wall 21a in the vehicle width direction, and a flange 21e extending downward from the outer end of the lower wall 21c in the vehicle width direction.

The side sill outer portion 22 is a plate member having a hat shape open toward the vehicle-width-direction inner side. To be more specific, the side sill outer portion 22 includes an upper wall 22a extending in the vehicle width direction, a side wall 22b extending downward from the outer end of the upper wall 22a in the vehicle width direction, and a lower wall 22c extending from the lower end of the side wall 22b toward the vehicle-width-direction inner side. The side sill outer portion 22 includes a flange 22d extending upward from the inner end of the upper wall 22a in the vehicle width direction, and a flange 22e extending downward from the inner end of the lower wall 22c in the vehicle width direction.

The side sill inner portion 21 and the side sill outer portion 22 are stuck and joined by spot welding in such a way as to define a space between the side sill inner portion 21 and the side sill outer portion 22. To be more specific, the flange 21d of the side sill inner portion 21 and the flange 22d of the side sill outer portion 22 are joined together by spot welding, and the flange 21e of the side sill inner portion 21 and the flange 22e of the side sill outer portion 22 are joined together by spot welding. Consequently, the side sill 20 is formed into a closed cross-sectional structure extending in the front-rear direction.

The lower vehicle-body structure 1 includes reinforcements 50 and brackets 60, the reinforcements 50 being disposed in the respective side sills 20, each bracket 60 fixing the reinforcement 50 to the side sill 20. FIG. 2 shows only the side sill 20A, which is one of the pair of side sills 20A, 20B. However, the reinforcement 50 and the brackets 60 are also disposed in the side sill 20B in the same manner, the side sill 20B being the other of the pair of side sills 20A, 20B.

The reinforcement 50 is disposed in the side sill 20. The reinforcement 50 extends in the front-rear direction over the entire length of the side sill 20. In the present embodiment, as shown in FIG. 3, the reinforcement 50 extends forward beyond the front end portion of the side sill 20 (only the side sill inner portion 21 being shown in FIG. 3). The front end portion of the reinforcement 50 is located below a hinge pillar 3 (only an inner pillar being shown in FIG. 3).

As shown in FIG. 2, in the up-down direction, the reinforcement 50 is positioned with the first cross member 30 and the second cross member 40 (only the positional relationship with the second cross member 40 being shown in FIG. 2). The reinforcement 50 is an extruded member made of aluminum. The longitudinal direction of the reinforcement 50 extends in the front-rear direction. In the cross section shown in FIG. 2, the reinforcement 50 has a rectangular closed cross-sectional shape elongated in the vehicle width direction. The reinforcement 50 has a substantially uniform cross sectional shape over the entire length in the longitudinal direction. The reinforcement 50 includes a first vertical wall 51, a second vertical wall 52, a first transverse wall 53, a second transverse wall 54, a first inner wall 55, and a second inner wall 56.

The first vertical wall 51 has a plate shape with the longitudinal direction thereof extending in the front-rear direction, the lateral direction thereof extending in the up-down direction, and the plate thickness direction thereof extending in the vehicle width direction. In cross section shown in FIG. 2, the first vertical wall 51 extends in the up-down direction as a whole. The first vertical wall 51 forms part of the outer shape of the reinforcement 50. To be more specific, the first vertical wall 51 forms the side wall of the reinforcement 50 on the vehicle-width-direction outer side.

The second vertical wall 52 has a plate shape with the longitudinal direction thereof extending in the front-rear direction, the lateral direction thereof extending in the up-down direction, and the plate thickness direction thereof extending in the vehicle width direction. In cross section shown in FIG. 2, the second vertical wall 52 extends in the up-down direction as a whole. The second vertical wall 52 forms part of the outer shape of the reinforcement 50. To be more specific, the second vertical wall 52 forms the side wall of the reinforcement 50 on the vehicle-width-direction inner side. The second vertical wall 52 is disposed on the vehicle-width-direction inner side relative to the first vertical wall 51. The second vertical wall 52 is disposed to be spaced apart from the first vertical wall 51 in the vehicle width direction.

The first transverse wall 53 has a plate shape with the longitudinal direction thereof extending in the front-rear direction, the lateral direction thereof extending in the vehicle width direction, and the plate thickness direction thereof extending in the up-down direction. In cross section shown in FIG. 2, the first transverse wall 53 extends in the vehicle width direction to couple the upper end of the first vertical wall 51 to the upper end of the second vertical wall 52. The first transverse wall 53 forms part of the outer shape of the reinforcement 50. To be more specific, the first transverse wall 53 forms the upper wall of the reinforcement 50.

The second transverse wall 54 has a plate shape with the longitudinal direction thereof extending in the front-rear direction, the lateral direction thereof extending in the vehicle width direction, and the plate thickness direction thereof extending in the up-down direction. In the cross section shown in FIG. 2, the second transverse wall 54 extends in the vehicle width direction to couple the lower end of the first vertical wall 51 to the lower end of the second vertical wall 52. The second transverse wall 54 forms part of the outer shape of the reinforcement 50. To be more specific, the second transverse wall 54 forms the lower wall of the reinforcement 50. The second transverse wall 54 is disposed below the first transverse wall 53. The second transverse wall 54 is disposed to be spaced apart from the first transverse wall 53 in the up-down direction.

The first inner wall 55 has a plate shape with the longitudinal direction thereof extending in the front-rear direction, the lateral direction thereof extending in the up-down direction, and the plate thickness direction thereof extending in the vehicle width direction. In the cross section shown in FIG. 2, the first inner wall 55 extends in the up-down direction to couple the first transverse wall 53 to the second transverse wall 54. The first inner wall 55 is disposed between the first vertical wall 51 and the second vertical wall 52 in the vehicle width direction.

The second inner wall 56 has a plate shape with the longitudinal direction thereof extending in the front-rear direction, the lateral direction thereof extending in the up-down direction, and the plate thickness direction thereof extending in the vehicle width direction. In the cross section shown in FIG. 2, the second inner wall 56 extends in the up-down direction to couple the first transverse wall 53 to the second transverse wall 54. The second inner wall 56 is disposed between the second vertical wall 52 and the first inner wall 55 in the vehicle width direction. In other words, the second inner wall 56 is disposed on the vehicle-width-direction inner side relative to the first inner wall 55.

The inner space having a rectangular cross section is defined in the reinforcement 50 by the first vertical wall 51, the second vertical wall 52, the first transverse wall 53, and the second transverse wall 54. This inner space is partitioned into three closed cross-sectional spaces by the first inner wall 55 and the second inner wall 56.

The reinforcement 50 is partitioned into three regions in the vehicle width direction. To be more specific, the reinforcement 50 is partitioned into three regions including an outer region R1, an intermediate region R2, and an inner region R3.

The outer region R1 is a region located between the first vertical wall 51 and the first inner wall 55 in the vehicle width direction within the reinforcement 50. The outer region R1 includes portions of the first transverse wall 53 and the second transverse wall 54, the portions extending in the vehicle width direction between the first vertical wall 51 and the first inner wall 55.

The intermediate region R2 is a region located between the first inner wall 55 and the second inner wall 56 in the vehicle width direction within the reinforcement 50. The intermediate region R2 includes portions of the first transverse wall 53 and the second transverse wall 54, the portions extending in the vehicle width direction between the first inner wall 55 and the second inner wall 56.

The inner region R3 is a region located between the second vertical wall 52 and the second inner wall 56 in the vehicle width direction within the reinforcement 50. The inner region R3 includes portions of the first transverse wall 53 and the second transverse wall 54, the portions extending in the vehicle width direction between the second vertical wall 52 and the second inner wall 56.

The reinforcement 50 is fastened to the side sill inner portion 21. The second vertical wall 52 of the reinforcement 50 is fastened to the side wall 21b of the side sill inner portion 21 with a bolt in the vehicle width direction.

The brackets 60 are disposed in the side sill 20. In the side sill 20, each bracket 60 is disposed below the reinforcement 50. The bracket 60 is made of steel. As shown in FIG. 3, the bracket 60 is provided in the side sill 20 at a plurality of positions (two positions in the present embodiment) that are spaced apart from each other in the front-rear direction. At least a portion of each bracket 60 is disposed at a position that overlaps with the hinge pillar 3 or a center pillar 4 when the vehicle is viewed in a side view, the hinge pillar 3 and the center pillar 4 extending upward from the side sill 20. To be more specific, two brackets 60 are provided in such a way as to partially overlap with a skirt portion 3a of the hinge pillar 3 and a skirt portion 4a of the center pillar 4 when the vehicle is viewed in a side view, the skirt portion 3a extending in the front-rear direction to allow the hinge pillar 3 to be connected to the side sill 20, the skirt portion 4a extending in the front-rear direction to allow the center pillar 4 to be connected to the side sill 20.

As shown in FIG. 2, the bracket 60 has a U shape when viewed in the front-rear direction. The bracket 60 includes an upper wall 60a, an inner wall 60b, and an outer wall 60c.

The upper wall 60a has a plate shape extending in the front-rear direction and the vehicle width direction, with the plate thickness direction extending in the up-down direction. The upper wall 60a is disposed to face the second transverse wall 54 of the reinforcement 50 in the up-down direction. The upper wall 60a is fixed to the lower surface of the reinforcement 50.

The inner wall 60b extends downward from the inner end of the upper wall 60a in the vehicle width direction. The inner wall 60b is disposed to face the side wall 21b of the side sill inner portion 21. The inner wall 60b is fixed to the side sill inner portion 21.

The outer wall 60c extends downward from the outer end of the upper wall 60a in the vehicle width direction. The outer wall 60c is disposed to face the inner wall 60b in a spaced-apart manner from the inner wall 60b in the vehicle width direction. The outer wall 60c is fixed to the side sill inner portion 21 and the side sill outer portion 22.

The bracket 60 is fastened to the reinforcement 50. The upper wall 60a of the bracket 60 is fastened to the second transverse wall 54 with a bolt in the inner region R3 of the reinforcement 50. That is, a fixing part, that is, a fastening point, between the upper wall 60a and the reinforcement 50 is disposed on the vehicle-width-direction inner side relative to the center of the reinforcement 50 in the vehicle width direction.

The bracket 60 is joined to the side sill 20 by spot welding. The inner wall 60b of the bracket 60 is joined to the side wall 21b of the side sill inner portion 21 in the vehicle width direction by spot welding. The outer wall 60c of the bracket 60, the side sill inner portion 21, and the side sill outer portion 22 are joined together by spot welding with the lower end portion of the outer wall 60c interposed between the flange 21e of the side sill inner portion 21 and the flange 22e of the side sill outer portion 22.

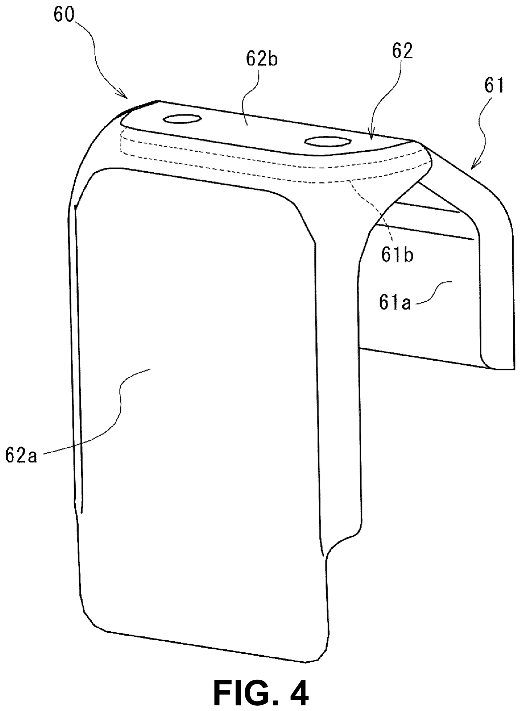

FIG. 4 is a perspective view of the bracket 60. Referring to FIG. 4, the bracket 60 of the present embodiment has a division structure including a first component 61 and a second component 62, which is a separate body from the first component 61.

The first component 61 is a press-formed product made from a steel plate. The first component 61 has an L shape as viewed from the front-rear direction. The first component 61 includes a first vertical plate 61a and a first transverse plate 61b. The first vertical plate 61a has a plate shape extending in the up-down direction and the front-rear direction, with the plate thickness direction extending in the vehicle width direction. The first vertical plate 61a forms the inner wall 60b of the bracket 60. The first transverse plate 61b has a plate shape extending in the vehicle width direction and the front-rear direction, with the plate thickness direction extending in the up-down direction. The first transverse plate 61b extends from the upper end of the first vertical plate 61a toward the vehicle-width-direction outer side.

The second component 62 is a press-formed product made from a steel plate. The second component 62 has an L shape as viewed from the front-rear direction. The second component 62 includes a second vertical plate 62a and a second transverse plate 62b. The second vertical plate 62a has a plate shape extending in the up-down direction and the front-rear direction, with the plate thickness direction extending in the vehicle width direction. The second vertical plate 62a is disposed on the vehicle-width-direction outer side relative to the first vertical plate 61a in such a way as to face the first vertical plate 61a in the vehicle width direction. The second vertical plate 62a forms the outer wall 60c of the bracket 60. The second transverse plate 62b has a plate shape extending in the vehicle width direction and the front-rear direction, with the plate thickness direction extending in the up-down direction. The second transverse plate 62b extends from the upper end of the second vertical plate 62a toward the vehicle-width-direction inner side.

The first transverse plate 61b of the first component 61 and the second transverse plate 62b of the second component 62 are made to overlap with each other in the up-down direction. The first transverse plate 61b and the second transverse plate 62b are joined together by welding in an overlapping state in the up-down direction. The second transverse plate 62b forms the upper wall 60a of the bracket 60 in cooperation with the first transverse plate 61b.

In the present embodiment, the inner wall 60b is coupled to the outer wall 60c in the vehicle width direction only via the upper wall 60a. In other words, the bracket 60 does not include a member connecting the inner wall 60b to the outer wall 60c, except for the upper wall 60a.

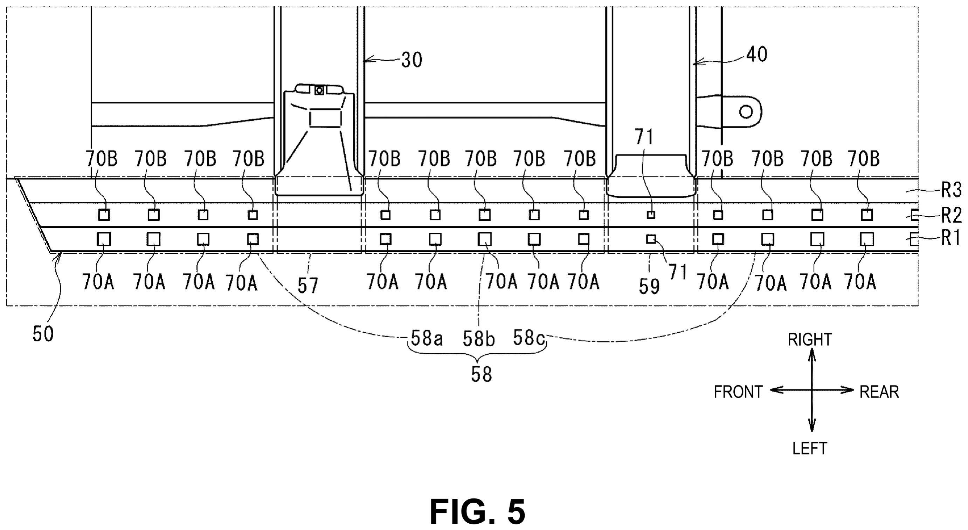

FIG. 5 is a top plan view of the lower vehicle-body structure 1, showing the reinforcement 50 and an area around the reinforcement 50, and the illustration of the side sill 20 is omitted in FIG. 5. Referring to FIG. 5, the reinforcement 50 includes a first part 57, a second part 58, and a third part 59.

The first part 57 is disposed at the position that overlaps with the first cross member 30 when the vehicle is viewed in a side view. In other words, the first part 57 is a part that overlaps with the first cross member 30 when viewed from the vehicle-width-direction outer side. The first part 57 is positioned with the first cross member 30 in the front-rear direction.

The second part 58 is disposed at the position that overlaps with neither the first cross member 30 nor the second cross member 40 when the vehicle is viewed in a side view. In other words, the second part 58 is a part that overlaps with neither the first cross member 30 nor the second cross member 40 when viewed from the vehicle-width-direction inner side. The second part 58 is disposed at the position displaced from the first cross member 30 and the second cross member 40 in the front-rear direction. In the present embodiment, the second part 58 is partitioned into three sections including a section 58a, a section 58b, and a section 58c, the section 58a being located forward of the first cross member 30, the section 58b being located rearward of the first cross member 30 and forward of the second cross member 40, the section 58c being located rearward of the second cross member 40.

The third part 59 is disposed at the position that overlaps with the second cross member 40 when the vehicle is viewed in a side view. In other words, the third part 59 is positioned with the second cross member 40 in the front-rear direction when viewed from the vehicle-width-direction outer side.

The rigidity of the second part 58 is lower than the rigidity of the first part 57. In the present embodiment, the second part 58 has a plurality of holes 70, and each hole 70 penetrate through the first transverse wall 53 and the second transverse wall 54 in the up-down direction. When a load is applied to the reinforcement 50 from the vehicle-width-direction outer side, stress concentrates in the area around the plurality of holes 70 formed in the second part 58, so that the plurality of holes 70 are likely to become a starting point of deformation. Consequently, the rigidity of the second part 58 having the plurality of holes 70 is lower than the rigidity of the first part 57 having no holes.

In the present embodiment, the plurality of holes 70 includes a plurality of holes 70A formed in the outer region R1, and a plurality of holes 70B formed in the intermediate region R2. The plurality of holes 70A are arranged in one line in the front-rear direction to be spaced apart from each other in the front-rear direction. The plurality of holes 70B are arranged in one line in the front-rear direction to be spaced apart from each other in the front-rear direction.

The rigidity of the third part 59 is lower than the rigidity of the first part 57, but is higher than the rigidity of the second part 58. In the present embodiment, the third part 59 has a plurality of holes 71, and each hole 71 penetrates through the first transverse wall 53 and the second transverse wall 54 in the up-down direction. When a load is applied to the reinforcement 50 from the vehicle-width-direction outer side, stress concentrates in the area around the plurality of holes 71 formed in the third part 59, so that the plurality of holes 71 are likely to become a starting point of deformation. Consequently, the rigidity of the third part 59 having the plurality of holes 71 is lower than the rigidity of the first part 57 having no holes. The number, the size, the shape, and the arrangement of the plurality of holes 71 formed in the third part 59 are set such that the rigidity of the third part 59 is higher than the rigidity of the second part. In the present embodiment, the opening area of each hole 71 formed in the third part 59 is smaller than the opening area of each hole 70 formed in the second part 58.

The second part 58 has a shape that increases the rigidity of the second part 58 toward the vehicle-width-direction inner side. In the present embodiment, the number, the size, the shape, and the arrangement of the plurality of holes 70 formed in the second part 58 are set such that the rigidity of the second part 58 increases toward the vehicle-width-direction inner side. In the present embodiment, the inner region R3 of the second part 58 has no holes, and the opening area of each hole 70B formed in the intermediate region R2 is smaller than the opening area of each hole 70A formed in the outer region R1. Consequently, the rigidity of the second part 58 tends to increase in a stepwise manner toward the vehicle-width-direction inner side. Specifically, in the second part 58, the rigidity of the inner region R3 is higher than the rigidity of the intermediate region R2, and the rigidity of the intermediate region R2 is higher than the rigidity of the outer region R1.

The second part 58 has a shape that increases the rigidity of the second part 58 as the second part 58 approaches the first part 57 or the third part 59. In the present embodiment, the number, the size, the shape, and the arrangement of the plurality of holes 70 formed in the second part 58 are set such that the rigidity of the second part 58 increases as the second part 58 approaches the first part 57 or the third part 59. In the present embodiment, in the section 58a, of two holes 70 disposed adjacent to each other in the front-rear direction, the hole 70 closer to the first part 57 has a smaller opening area than the hole 70 farther from the first part 57. In the section 58b, of two holes 70 disposed adjacent to each other in the front-rear direction, the hole 70 closer to the center of the section 58b in the front-rear direction has a larger opening area than the hole 70 farther from the center of the section 58b in the front-rear direction. In the section 58c, of two holes 70 disposed adjacent to each other in the front-rear direction, the hole 70 closer to the third part 59 has a smaller opening area than the hole 70 farther from the third part 59. Consequently, in each of the sections 58a to 58c of the second part 58, the rigidity of the second part 58 tends to increase as the second part 58 approaches the first part 57 or the third part 59.

The lower vehicle-body structure 1 according to the present embodiment has the following manner of operation and advantageous effects.
(1) The lower vehicle-body structure 1 according to the present embodiment includes:
   the floor panel 10;
   the pair of side sills 20 disposed at both ends of the floor panel 10 in the vehicle width direction, and extending in the front-rear direction;
   at least one cross member (in the present embodiment, the first cross member 30 and the second cross member 40) disposed on the upper surface of the floor panel 10, and extending in the vehicle width direction to couple the pair of side sills 20 together; and
   the reinforcement 50 extending in the front-rear direction in each of the pair of side sills 20, wherein
   the reinforcement 50 includes
      the first part 57 disposed at the position that overlaps with the first cross member 30 when the vehicle is viewed in a side view, and
      the second part 58 disposed at the position that does not overlap with the first cross member 30 when the vehicle is viewed in a side view, and
   the rigidity of the second part 58 against a load from the vehicle-width-direction outer side is lower than the rigidity of the first part 57 against a load from the vehicle-width-direction outer side.

Preferably, the second part 58 disposed at a position that does not overlap with any cross member of the lower vehicle-body structure 1.

The lower vehicle-body structure 1 according to the present embodiment allows a load applied to the side sill 20 from the vehicle-width-direction outer side to be efficiently transmitted to the first cross member 30. In the case in which the second part 58 has an excessively high rigidity, when a load applied to the side sill 20 from the vehicle-width-direction outer side acts on the second part 58, there may be cases in which the second part 58 is less likely to be compressed in the vehicle width direction, leading to bending deformation. In this case, the load applied to the side sill 20 from the vehicle-width-direction outer side cannot be efficiently transmitted to the first cross member 30 via the reinforcement 50. In contrast, with this configuration, the rigidity of the second part 58 is lower than the rigidity of the first part 57 and hence, compared with a configuration in which the rigidity of the second part 58 is equal to or higher than the rigidity of the first part 57, the second part 58 is likely to be compressed and deformed when a load acts on the second part 58 from the vehicle-width-direction outer side. As a result, the bending deformation of the reinforcement 50 is suppressed, and a load applied to the side sill 20 from the vehicle-width-direction outer side can be efficiently transmitted to the first cross member 30 via the reinforcement 50.

(2) At least one cross member includes
the first cross member 30 to which the seat bracket 31 for fixing a seat is attached, and
the second cross member 40 disposed at a different position from the first cross member 30 in the front-rear direction,
the first part 57 is disposed at the position that overlaps with the first cross member 30 when the vehicle is viewed in a side view,
the second part 58 is a part that overlaps with neither the first cross member 30 nor the second cross member 40 when the vehicle is viewed in a side view,
the reinforcement 50 includes the third part 59 that overlaps with the second cross member 40 when the vehicle is viewed in a side view, and
the rigidity of the third part 59 against a load from the vehicle-width-direction outer side is lower than the rigidity of the first part 57 against the load from the vehicle-width-direction outer side, but is higher than the rigidity of the second part 58 against the load from the vehicle-width-direction outer side.

Preferably, the second part 58 is located between the first part 57 and the third part 59.

Preferably, the first part 57 is located in front of the third part 59 in a vehicle front-rear direction.

The lower vehicle-body structure 1 according to the present embodiment allows a load applied to the side sill 20 from the vehicle-width-direction outer side to be efficiently transmitted to the first cross member 30 and the second cross member 40. In general, the rigidity of the cross member to which a seat is attached is higher than the rigidity of other cross members. In the case in which the third part 59 has an excessively high rigidity, when a load from the vehicle-width-direction outer side acts on the third part 59 of the reinforcement 50, the second cross member 40 cannot provide a sufficient reaction force in the vehicle width direction against the load and hence, there may be cases in which the third part 59 is less likely to be compressed, leading to bending deformation. In this case, the load applied to the side sill 20 from the vehicle-width-direction outer side cannot be efficiently transmitted to the first cross member 30 and the second cross member 40 via the reinforcement 50. In contrast, with this configuration, the rigidity of the third part 59 is lower than the rigidity of the first part 57 and hence, compared with a configuration in which the rigidity of the third part 59 is equal to or higher than the rigidity of the first part 57, the third part 59 is likely to be compressed and deformed when a load acts on the third part 59 from the vehicle-width-direction outer side. As a result, the bending deformation of the reinforcement 50 is suppressed, and a load applied to the side sill 20 from the vehicle-width-direction outer side can be efficiently transmitted to the first cross member 30 and the second cross member 40 via the reinforcement 50.

(3) The second part 58 has a shape that increases, toward the vehicle-width-direction inner side, the rigidity of the second part 58 against the load from the vehicle-width-direction outer side.

The lower vehicle-body structure 1 according to the present embodiment allows a load applied to the side sill 20 from the vehicle-width-direction outer side to be efficiently transmitted to the first cross member 30. The second part 58 has the shape that increases, toward the vehicle-width-direction inner side, the rigidity of the second part 58 against a load from the vehicle-width-direction outer side and hence, the second part 58 is likely to be compressed during the initial stage of a side collision, in which an object, such as a pole, collides with the second part 58 from the vehicle-width-direction outer side. Thus, the second part 58 is compressed during the initial stage of the side collision and hence, the second part 58 effectively absorbs impact energy, and a portion of the second part 58 on the vehicle-width-direction inner side withstands the collision during the latter stage of the collision. Accordingly, the load applied to the side sill 20 from the vehicle-width-direction outer side can be efficiently transmitted to the first cross member 30 and the second cross member 40 via the reinforcement 50.

(4) The first part 57 and the second part 58 are disposed adjacent to each other in the front-rear direction, and the second part 58 has a shape that increases the rigidity of the second part 58 against the load from the vehicle-width-direction outer side as the second part 58 approaches the first part 57 in the front-rear direction.

According to the present embodiment, a load applied to the side sill 20 from the vehicle-width-direction outer side can be efficiently transmitted to the first cross member 30. The rigidity of the second part 58 gradually increases as the second part 58 approaches the first part 57 in the front-rear direction and hence, it is possible to suppress a rapid change in rigidity between the first part 57 and the second part 58. As a result, rigidity required for the entire reinforcement 50 can be ensured, and a load applied to the side sill 20 from the vehicle-width-direction outer side can be efficiently transmitted to the first cross member 30.

(5) The second part 58 has the holes 70 penetrating through the second part 58 in the up-down direction.

According to the present embodiment, it is possible to easily manufacture the lower vehicle-body structure 1 that allows a load applied to the side sill 20 from the vehicle-width-direction outer side to be efficiently transmitted to the first cross member 30.

### (Modification)

The present disclosure is not limited to the configurations described in the embodiment, and various modifications are conceivable.

In the embodiment, the rigidity of the second part 58 is made lower than the rigidity of the first part 57 by forming the holes 70 in the second part 58. However, the rigidity of the second part 58 may be made lower than the rigidity of the first part 57 by, for example, other features, such as beads, grooves, or thin wall portions, formed on the second part 58. The number, the size, the shape, and the arrangement of the features that make the rigidity of the second part 58 lower than the rigidity of the first part 57 can be suitably changed. In the same manner, the rigidity of the third part 59 may be made lower than the rigidity of the first part 57, and higher than the rigidity of the second part 58 by, for example, other features, such as beads, grooves, or thin wall portions, formed on the third part 59.

In the embodiment, the first part 57 has no holes. However, the first part 57 may have holes.

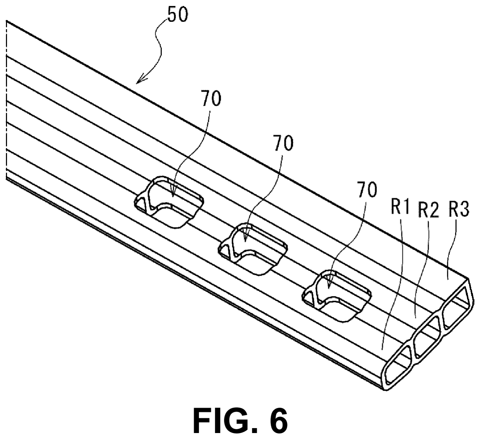

In the embodiment, the holes 70A are formed in the outer region R1, and the holes 70B are formed in the intermediate region R2. However, as in the case of the modification shown in FIG. 6, holes 70 may be formed to straddle the outer region R1 and the intermediate region R2. Alternatively, the holes 70 may be formed in the inner region R3.

### [Reference Signs List]

- 1: lower vehicle-body structure
- 2: battery case
- 3: hinge pillar
- 10: floor panel
- 20: side sill
- 21: side sill inner portion
- 21a: upper wall
- 21b: side wall
- 21c: lower wall
- 21d: flange
- 22e: flange
- 22: side sill outer portion
- 22a: upper wall
- 22b: side wall
- 22c: lower wall
- 22d: flange
- 22e: flange
- 30: first cross member (cross member)
- 31: seat bracket
- 40: second cross member (cross member)
- 41: gusset
- 50: reinforcement
- 51: first vertical wall
- 52: second vertical wall
- 53: first transverse wall
- 54: second transverse wall
- 55: first inner wall
- 56: second inner wall
- 57: first part
- 58: second part
- 59: third part
- 60: bracket
- 60a: upper wall
- 60b: inner wall
- 60c: outer wall
- 61: first component
- 61a: first vertical plate
- 61b: first transverse plate
- 62: second component
- 62a: second vertical plate
- 62b: second transverse plate
- 70: hole
- 71: hole

## Claims

1. A lower vehicle-body structure (1) comprising:
a floor panel (10);
a pair of side sills (20) disposed at both ends of the floor panel (10) in a vehicle width direction, and extending in a front-rear direction;
at least one cross member (30, 40) disposed on an upper surface of the floor panel (10), and extending in the vehicle width direction to couple the pair of side sills (20) together; and
a reinforcement (50) extending in the front-rear direction in each of the pair of side sills (20), wherein
the reinforcement (50) includes
a first part (57) disposed at a position that overlaps with the at least one cross member (30, 40) when a vehicle is viewed in a side view, and
a second part (58) disposed at a position that does not overlap with the at least one cross member (30, 40) when the vehicle is viewed in a side view, and
a rigidity of the second part (58) against a load from a vehicle-width-direction outer side is lower than a rigidity of the first part (57) against a load from the vehicle-width-direction outer side.

2. The lower vehicle-body structure according to claim 1, wherein
the at least one cross member (30, 40) includes
a first cross member (30) to which a seat bracket (31) for fixing a seat is attached, and
a second cross member (40) disposed at a different position from the first cross member (30) in the front-rear direction,
the first part (57) is disposed at a position that overlaps with the first cross member (30) when the vehicle is viewed in a side view,
the second part (58) is a part that overlaps with neither the first cross member (30) nor the second cross member (40) when the vehicle is viewed in a side view,
the reinforcement (50) includes a third part (59) that overlaps with the second cross member (40) when the vehicle is viewed in a side view, and
a rigidity of the third part (59) against a load from the vehicle-width-direction outer side is lower than the rigidity of the first part (57) against the load from the vehicle-width-direction outer side, but is higher than the rigidity of the second part (58) against the load from the vehicle-width-direction outer side.

3. The lower vehicle-body structure according to claim 1 or claim 2, wherein
the second part (58) and/or the third part (59) has a shape that increases, toward a vehicle-width-direction inner side, the rigidity of the second part (58) and/or the third part (59) against the load from the vehicle-width-direction outer side.

4. The lower vehicle-body structure according to any one of the preceding claims, wherein
the first part (57) and the second part (58) are disposed adjacent to each other in the front-rear direction, and
the second part (58) has a shape that increases the rigidity of the second part (58) against the load from the vehicle-width-direction outer side as the second part (58) approaches the first part (57) in the front-rear direction.

5. The lower vehicle-body structure according to any one of the preceding claims, wherein the second part (58) and/or the third part (59) has at least one hole penetrating through the second part (58) in an up-down direction.

6. The lower vehicle-body structure according to any one of the preceding claims, wherein
the differences in the rigidity of the first part (57), the second part (58) and/or third part (59) against a load from the vehicle-width-direction outer side is provided by holes (70, 71) penetrating through the reinforcement (50) in an up-down direction.

7. The lower vehicle-body structure according to claim 6, wherein
the holes (70, 71) differ between the first part (57), the second part (58) and/or third part (59) regarding their number, size, shape and/or arrangement.

8. The lower vehicle-body structure according to claim 6 or 7, wherein
no holes are provided in the first part (57).

9. The lower vehicle-body structure according to any one of claims 6 to 8, wherein
the holes (70) provided in the second part (58) have a larger opening area than the holes (71) provided in the third part (59).

10. The lower vehicle-body structure according to any one of claims 6 to 9, wherein
the number and/or opening area of the holes provided in the second part (58) and/or the third part (59) increases from a vehicle-width-direction inner side towards a vehicle-width-direction outer side.

11. The lower vehicle-body structure according to any one of the preceding claims, wherein
in a vehicle width direction, an inner region (R3) of the reinforcement (50) has fewer and/or smaller holes than an outer region (R1), wherein preferably, the inner region (R3) has no holes.

12. The lower vehicle-body structure according to any one of the preceding claims, wherein
in a vehicle width direction, an intermediate region (R2) of the reinforcement (50) has fewer and/or smaller holes than an outer region (R1),
wherein preferably, an opening area of each hole (70B) formed in the intermediate region (R2) is smaller than the opening area of each hole (70A) formed in the outer region (R1).

13. The lower vehicle-body structure (1) of a vehicle according to any one of the preceding claims, wherein
the reinforcement (50) has a uniform cross sectional shape over its entire length in the front-rear direction
and/or
the reinforcement (50) is an extruded member
and/or
the reinforcement (50) extends in the vehicle front-rear direction and has a closed cross-sectional shape in a vehicle width direction,
and/or
the reinforcement (50) is spaced apart from the side sill except for a second vertical wall (52) that forms the side wall of the reinforcement (50) on the vehicle-width-direction inner side, which is in contact with the side sill.

14. The lower vehicle-body structure according to any one of the preceding claims, wherein the reinforcement (50) includes:
a first vertical wall (51) that forms the side wall of the reinforcement (50) on the vehicle-width-direction outer side,
a second vertical wall (52) that forms the side wall of the reinforcement (50) on the vehicle-width-direction inner side,
a first transverse wall (53) that forms the upper wall of the reinforcement (50),
a second transverse wall (54) that forms the lower wall of the reinforcement (50),
one or a plurality of inner walls (55, 56) extending in the up-down direction to couple the first transverse wall (53) to the second transverse wall (54),
wherein an inner space of the reinforcement is partitioned into a plurality of closed cross-sectional spaces (R1, R2, R3) by the one or a plurality of inner walls (55, 56),
wherein preferably, holes are provided in the first transverse wall (53) and/or second transverse wall (54) of at least one of the closed cross-sectional spaces (R1, R2, R3) that is not the innermost closed cross-sectional space (R3) and/or no holes are provided in the first transverse wall (53) and/or second transverse wall (54) of the innermost closed cross-sectional space (R3),
and/or
wherein preferably, there are two inner walls (55, 56) and three closed cross-sectional spaces (R1, R2, R3),
wherein the three closed cross-sectional spaces (R1, R2, R3) correspond to an inner region (R3), and intermediate region (R2) and an outer region (R1) as defined in claims 11 and/or 12.

15. A vehicle comprising a lower vehicle-body structure (1) according to any one of the preceding claims.
